# EUROPEAN PATENT SPECIFICATION

(11) **EP 3 393 235 B1**
(45) Date of publication and mention of the grant of the patent: **19.08.2020**
(21) Application number: 16831734.5
(22) Date of filing: 14.12.2016
(51) Int. Cl.: A01J 5/08

(54) **VENTED LINER FOR MILKING PLANTS**
BELÜFTETE AUSKLEIDUNG FÜR MELKANLAGEN
MANCHON TRAYEUR AÉRÉ POUR INSTALLATIONS DE TRAITE

(30) Priority: 22.12.2015 IT UB20159500
(43) Date of publication of application: 31.10.2018
(73) Proprietor: Interpuls S.P.A., 42020 Albinea (RE) (IT)
(72) Inventor: SICURI, Roberto, 42020 Albinea (RE) (IT); NICOLINI, Gabriele, 42020 Albinea (RE) (IT)
(74) Representative: Robba, Pierpaolo
(86) International application number: PCT/IB2016/057602
(87) International publication number: WO 2017/109643

(56) References cited:
- WO-A1-2009/048417
- GB-A- 644 168

## Description

### Technical sector

This invention relates to a vented liner for milking plants comprising the part applied to the teat of the animal which has to be milked.

### Known art

In the milking plants sector the use of liners inserted into teat cup shells for application to the teats of the animals which have to be milked is known.

In known milking plants the performance of the plant depends mainly on the liner, in particular its geometry and the material of which it is made.

As far as the material of the liner is concerned, this must have properties such that the mechanical action exerted by the liner onto the animal's teat does not damage the skin over time; in addition to this it must withstand the corrosive action of the washing acids with which it comes into contact on a daily basis over a long period.

As far as the geometry of the liner is concerned, this makes it possible for the milk to be physically extracted quickly from the animal's teat without adversely affecting the state of its surface morphology. This is an essential aspect for protecting the animal's physical integrity and its absence may in extreme circumstances give rise to surface damage to the teats such as to irreversibly compromise the animal's productivity and health. In addition to this basic requirement, optimum geometry makes it possible to remove all the milk produced within a short time without giving rise to any excessive stress on the animal, protecting its physical wellbeing.

In general known liners schematically comprise:
1) a head comprising a hole or opening and constituting the extremity of the liner projecting from the teat cup shell and representing the mouthpiece for the teat of the animal which has to be milked;
2) a body, representing the central portion present within the teat cup shell, in which the teat (the portion which is more specifically milked) is housed. The body performs the delicate function of removing the milk from the teat; its geometry and the softness of the material of which it is made must be such as not to damage the surface skin of the teat. These aspects are essential for obtaining maximum yield when milk is extracted, while protecting the animal's health;
3) a short milk tube comprising the portion of the liner located outside the teat cup shell and positioned on the other side of the head. This constitutes the duct through which the freshly milked milk flows in order to be conveyed into the collector to which it is connected, its free extremity being inserted onto the nipple of the milk collector. Such a liner is known from GB644168 A.

The overall performance of a liner depends on each of the three above-mentioned portions of which it is made, and these in turn are geometrically defined on the basis of the type of animal for which they are intended. In particular liners are classified into:
- liners for cattle, which are in turn divided into liners for purebred cattle and cross-bred cattle, which differ appreciably from each other in the size of their teats;
- liners for small ruminants, which in turn are subdivided into liners for goats and liners for sheep, in that the teats of the latter are very much smaller than those of goats.

Irrespective of their type the liners are all inserted into the appropriate teat cup shell dimensioned on the basis of the type of liner which it has to contain; as far as their operation is concerned, all types of liners should open and close onto themselves along the length comprising the body under the effect of the pneumatic signal from the pulsator connected to the teat cup shell containing the liner. The interior of the body of the liner is constantly subjected to the force of the vacuum present in the plant milk duct, while the annular ring lying between the outer wall of the body and the inner wall of the teat cup shell experiences an alternation in pressure varying from the vacuum present within the body to atmospheric pressure (pulsing signal generated by the pulsator).

This combination and alternation of pressures causes cyclical opening and closing of the liner onto itself along the length comprising the body; through this movement the milk can be drawn off from the teat when the liner is open internally thanks to the force of the vacuum.

When the liner is closed upon itself it isolates the teat from the collector, which is the source of vacuum. This is an essential condition for the animal's health, in that the atmospheric pressure restored around the teat allows blood to circulate correctly within it, while during the previous stage in which the liner is open, blood was concentrated at the surface and tip of the teat through the effect of the vacuum.

If there were to be no atmospheric pressure at this stage it would not be possible for blood to circulate in the teat, with the consequent occurrence of painful itching and swelling, all of which are harmful and unpleasant collateral effects for the animal because of the delicate nature and sensitivity of the area in question.

Liners according to the known art therefore provide that blood circulation in the teat is made possible by closure of the liner onto the teat, thus isolating it from the source of vacuum represented by the collector into which the liner is inserted. An alternative liner has been produced in the form of so-called vented liners, which differ from those described above in the following respects:
1) In the median zone of the head of the vented liner there is a hole into which a small steel insert comprising a gauged hole of the order of 1 mm in diameter is press-fitted.
2) The geometry of the body of the vented liner differs from that of conventional cylindrical liners through adopting other shapes, such as for example shapes having a cross-section of the square or triangular type, the latter being more widely used than the former.

The presence of the pierced insert makes it possible to generate a controlled and constant inflow of air into the head of the vented liner, air which is present throughout the duration of the milking cycle. This inflow of air generates a very high thrusting motor effect on the milk, making discharge of the milk very fast, which is advantageous for a high-performing milking system in terms of drawing off the milk.

Generally the insert is inserted into a vented liner having a body of triangular cross-section, which nevertheless has connecting holes between the internal volume of the vented liner beneath the teat and the collector even during the closing (or massaging) stage of the pulsing cycle in which the vented liners close upon themselves.

Despite the fact that the vented liner is incompletely closed beneath the tip of the teat, the volume surrounding the teat is generally under a minimum negative pressure sufficient to maintain the milking unit in operation, but has numerical values which are sufficiently low to allow the effective circulation of blood within the teat.

The triangular cross-sectional geometry of the liner body has been adopted as a result of improved experimental tests in comparison with the conventional circular cross-section for the reason that it has less invasive contact when it closes upon itself, and therefore upon the outer wall of the teat.

At the same time the triangular cross-section liner body provides less of a seal when the liner collapses on itself in comparison with conventional liners of cylindrical cross-section, having more extensive through spaces beneath the teat. In this configuration the amount of vacuum in the volume containing the teat remains higher because of imperfect closure of the liner, obstructing natural circulation of blood within the teat.

The air at atmospheric pressure entering through the hole in the steel insert present in the head of the vented liner eliminates the vacuum affecting the part of the liner containing the teat, allowing the blood to circulate freely within it, thus minimising the adverse effect caused by leakage from the liner.

However the device of the type described above has some disadvantages.

One disadvantage of the device is due to the fact that the hole in the steel insert, which is of very small diameter, can become blocked because of its contact with dirt present around the animal, in particular that caused by its excretions.

Another disadvantage of the device is caused by the fact that during the stage of automatic detachment of the milking unit from the animal the unit comprising the liner with the pierced steel insert very frequently suffers impacts against the fixed structures comprising the milking parlour.

Partly because of the smooth edge of the steel insert, these impacts frequently cause the pierced steel inserts to be expelled from their corresponding seats provided in the heads of the vented liners.

For this reason the inserts are lost without the operators becoming aware of it, and the hole without insert remains in the head of the vented liner, causing a greater inflow of air into the vented liner with the consequent entry of bacteria within it, which come into contact with the milk, contaminating it.

### Summary of the invention

It is the object of the invention to provide a vented liner for milking plants which prevents the pierced insert from being expelled from its corresponding seat in the head of the liner. The particular shape of the insert may prevent the hole made in the head of the vented liner allowing air at atmospheric pressure to flow within from becoming blocked.

These and other objects will be accomplished by this invention through the provision of a vented liner for milking plants according to the appended claims.

It should be understood that the appended claims comprise an integral part of the technical teaching provided here in this description relating to the invention.

### Brief description of the figures

Further characteristics and advantages of this invention will be clearly apparent from the following detailed description provided purely by way of a non-limiting example with reference to the appended drawings, in which:
- Figure 1 is a view in cross-section of a vented liner for milking plants according to this invention in a first operating configuration;
- Figure 2 is a cross-sectional view of a vented liner for milking parts according to this invention in a second operating configuration;
- Figure 3 is a view in partial cross-section of a vented liner for milking plants according to this invention;

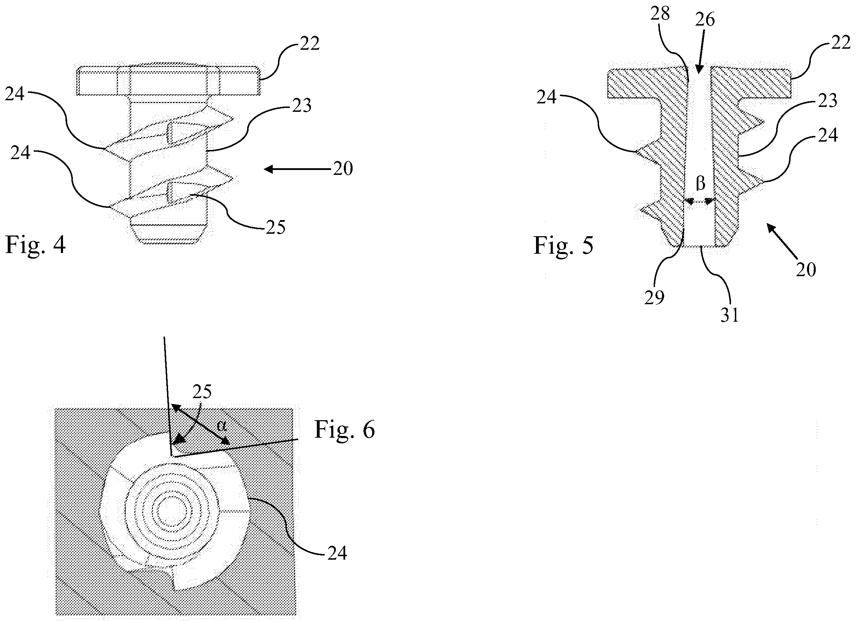

- Figure 4 is a view of one component of a vented liner for milking plants according to this invention;
- Figure 5 is a cross-sectional view of one component of a vented liner for milking plants according to this invention; and
- Figure 6 is a cross-sectional view of one component of a vented liner for milking plants according to this invention.

### Description of a preferred embodiment

With reference to the figures, one embodiment of a vented liner 10 for milking plants according to this invention is illustrated.

Vented liner 10 comprises a head 14 which is the extremity of the liner projecting from a teat cup shell 12 and includes an orifice 19 constituting the mouthpiece for the teat 18 of the animal which is to be milked.

Vented liner 10 also comprises a body 15, which is the central portion of vented liner 10 present within teat cup shell 12 in which teat 18 is housed, and a milk tube 16 comprising the portion of vented liner 10 outside teat cup shell 12, which is positioned opposite head 14.

Preferably body 15 of vented liner 10 according to the invention has a triangular cross-section, but the invention may also apply to liners having cylindrical or square cross-sections.

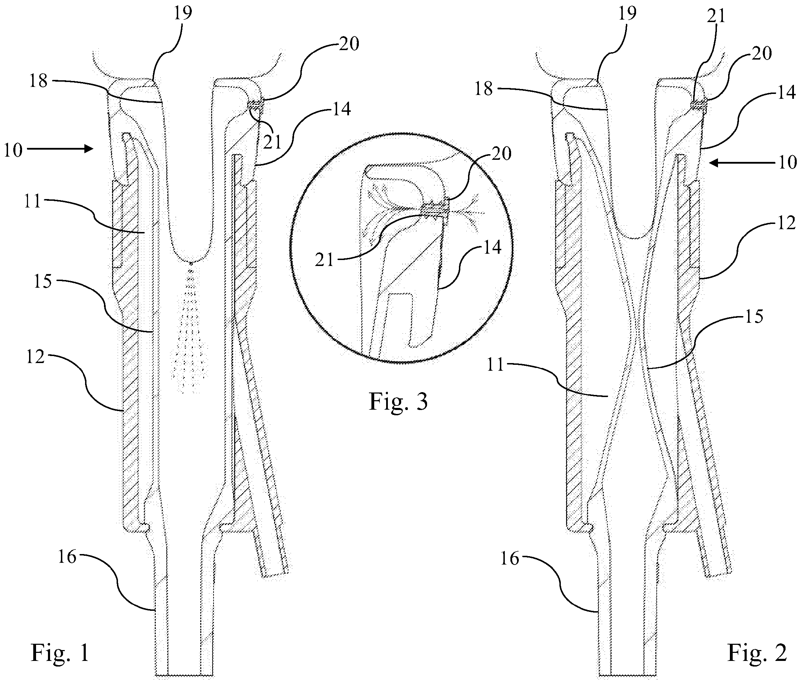

Figure 1 illustrates vented liner 10 with corresponding teat cup shell 12 during milking, in which there is a vacuum in an annular ring 11 lying between the outer wall of body 15 and the inner wall of teat cup shell 12, and Figure 2 illustrates vented liner 10 with a corresponding teat cup shell 12 during a massaging stage, in which annular ring 11 is at atmospheric pressure and vented liner 10 is closed upon itself at body 15.

Vented liner 10 comprises a pierced insert 20, preferably made of food-grade plastics and capable of being inserted in the head 14 of vented liner 10, preferably within a pierced seat 21 provided in head 14 of vented liner 10.

Insert 20 comprises a preferably cylindrical shaft 23 and a shaped, preferably hexagonal, insert head 22 connected to shaft 23 on which there is a thread 24 having a very fine projecting helical thread 24.

Insert 20 can be screwed onto head 14 of vented liner 10, preferably in pierced seat 21, by means of a suitable wrench which acts on the head of insert 22, penetrating the rubber constituting the liner and gripping it.

For example, a thread of outside diameter 4.4 mm is provided on an insert 20 having a shaft 23 of diameter 2.6 mm.

Insert 20 comprises a through-hole 26 made longitudinally in shaft 23 which passes through the head of insert 22 and shaft 23 to allow controlled, constant inflow of air into head 14 of vented liner 10.

Through-hole 26 has an upper portion 28 of constant diameter, preferably of cylindrical shape and provided at the head of insert 22, and a divergent lower portion 29, preferably of a frusto-conical shape, made in shaft 23 to make through-hole 26 self-cleaning.

Upper length 28 of through-hole 26 is of limited depth, preferably less than 1 mm, and preferably has a diameter of less than 1 mm.

Lower portion 29 of through-hole 26 has an opening 31 for the entry of air into vented liner 10, preferably of diameter greater than 1 mm.

For example through-hole 26 has an upper portion 28 of diameter 0.8 mm and depth 0.7 mm, and opening 31 exiting from lower portion 29 of through-hole 26 has a diameter of 1.1 mm, with an angle of inclination β of 4° to the wall of lower portion 29.

Preferably at least one stress relief indentation 25, for example three stress relief indentations 25 which are suitably shaped and can be obtained by moulding, are provided on the thread with the function of preventing it from unscrewing when permanently coupled between insert 20 and head 14 of vented liner 10, to prevent any undesired slackening of insert 20.

Preferably stress relief indentation 25 has two side walls at an incident acute angle α to receive within it a rubber portion of vented liner 10, making use of its elasticity as it is screwed up to prevent reverse rotation which would result in it becoming unscrewed.

Vented liner 10 for milking plants according to the invention operates as follows.

Through-hole 26 of insert 20 according to the invention has self-cleaning properties as a result of its conformation, with upper portion 28 of constant diameter and divergent lower portion 29 to reduce friction in the passage of air, thus preventing the air from depositing any impurities which it carries during its passage over the walls of through-hole 26, ultimately blocking it.

The presence of shaped insert head 22 and thread 24 allows insert 20 to be screwed into the seat provided in head 14 of vented liner 10 through the use of a suitable wrench, for example of the hexagonal type, until insert head 22 abuts against the wall of head 14 of the liner.

As insert 20 is being screwed in, thread 24 penetrates the rubber of which vented liner 10 is made in such a way that stress relief indentations 25 have within them a portion of rubber constituting vented liner 10, preventing insert 20 from becoming unscrewed.

Advantageously the presence of unscrewable insert 20 makes it possible to vary the diameter of through-hole 26, replacing the insert with one having a through-hole 26 of different diameter.

Another advantage is provided by the fact that through-hole 26 has self-cleaning properties as a result of its divergent conformation.

A further advantage of the liner according to the invention is provided by stress relief indentations 25 which have an anti-unscrewing function to prevent insert 20 from becoming undesirably slackened.

It is evident that the manner of implementation and details of embodiments may be varied within what has been described and illustrated purely by way of a non-limiting example. The scope of the invention is defined by the appended claims.

## Claims

1. Vented liner (10) for milking plants, comprising:
- a head (14) comprising an orifice (19) forming the mouthpiece for the teat (18) of the animal to be milked;
- a body (15) consisting of the central portion of the vented liner (10) in which the teat (18) is received during milking;
- a milk tube (16) consisting of the portion of the vented liner (10) that is located opposite to the head (14);
- an insert (20) insertable into the head (14) of the vented liner (10), said insert comprising a shaft (23), an insert head (22) connected to the shaft (23), and a through-hole (26) formed longitudinally inside the shaft (23) and passing through the insert head (22) and the shaft (23) for allowing controlled, constant entry of air into the head (14) of the vented liner (10);
**characterized in that** on the shaft (23) there is provided a thread (24) adapted to be screwed into the head (14) of the vented liner (10) and penetrate into the rubber of which the liner is made.

2. Vented liner (10) for milking plants according to claim 1, **characterized in that** said through-hole (26) comprises an upper portion (28) having a constant diameter and being provided at the insert head (22), and a divergent lower portion (29) provided in the shaft (23) for making the through-hole (26) self-cleaning

3. Vented liner (10) for milking plants according to claim 2, **characterized in that** the upper portion (28) of the through-hole (26) has a cylindrical shape, and the divergent lower portion (29) has a frusto-conical shape.

4. Vented liner (10) for milking plants according to claim 2 or 3, **characterized in that** the upper portion (28) of the through-hole (26) has a depth lower than 1 mm and a diameter smaller than 1 mm.

5. Vented liner (10) for milking plants according to any of the preceding claims, **characterized in that** on the thread there is provided at least one stress relief indentation (25) having an anti-unscrewing function, for preventing undesired loosening of the insert (20).

6. Vented liner (10) for milking plants according to claim 5, **characterized in that** the stress relief indentation (25) comprises two side walls incident at an acute angle (α), in order to receive inside it a portion of the rubber of the vented liner (10) by exploiting elasticity thereof during screwing, so as to hinder reverse rotation which would cause unscrewing.

7. Vented liner (10) for milking plants according to any of the preceding claims, **characterized in that** the head (14) of the vented liner (10) comprises a pierced seat (21) and **in that** the insert (20) is insertable by screwing it into the pierced seat (21).

8. Vented liner (10) for milking plants according to any of the preceding claims, **characterized in that** the of the insert head (22) is shaped so as to allow screwing of the insert (20) by means of a suitable wrench acting on insert head (22).

9. Vented liner (10) for milking plants according to any of the preceding claims, **characterized in that** the body (15) of the vented liner (10) has a triangular, cylindrical or square cross-section.

10. Vented liner (10) for milking plants according to any of the preceding claims, **characterized in that** the body (15) of the vented liner (10) is held within a teat cup shell (12), the head (14) of the vented liner (10) projects from the teat cup shell (12) and the milk tube (16) of the vented liner (10) is outside the teat cup shell (12).

11. Vented liner (10) for milking plants according to any of the preceding claims, **characterized in that** the pierced insert (20) is made of food-grade plastics.

## Patentansprüche

1. Belüftete Auskleidung (10) für Melkanlagen, mit:
- einem Kopf (14), der eine Öffnung (19) aufweist, die ein Mundstück für die Zitze (18) des zu melkenden Tieres bildet,
- einem Körper (15), der aus dem zentralen Abschnitt der belüftete Auskleidung (10) besteht, welche die Zitze (18) beim Melken aufnimmt,
- einer Milchleitung (16), die aus dem Abschnitt der belüfteten Auskleidung (10) besteht, die dem Kopf (14) gegenüber angeordnet ist,
- einem Einsatz (20), der in den Kopf (14) der belüfteten Auskleidung (10) einsetzbar ist, wobei der Einsatz einen Schaft (23), einen Einsatzkopf (22), der mit dem Schaft (23) verbunden ist, und ein durchgehendes Loch (26) aufweist, das in dem Schaft (23) längs ausgebildet ist und durch den Einsatzkopf (22) und den Schaft (23) hindurchführt, um kontrollierten, konstanten Lufteinlass in den Kopf (14) der belüfteten Auskleidung (10) zu ermöglichen,
**dadurch gekennzeichnet, dass** der Schaft (23) mit einem Gewinde (24) versehen ist, das dafür ausgelegt ist, in den Kopf (14) der belüfteten Auskleidung (10) geschraubt zu werden und in das Gummi einzudringen, aus dem die Auskleidung gemacht ist.

2. Belüftete Auskleidung (10) für Melkanlagen nach Anspruch 1, **dadurch gekennzeichnet, dass** das durchgehende Loch (26) einen oberen Abschnitt (28), der ein konstanten Durchmesser hat und an dem Einsatzkopf (22) vorgesehen ist, und einen auseinanderlaufenden unteren Abschnitt (29), der in dem Schaft (23) vorgesehen ist, um das durchgehende Loch selbstreinigend zu machen, aufweist.

3. Belüftete Auskleidung (10) für Melkanlagen nach Anspruch 2, **dadurch gekennzeichnet, dass** der obere Abschnitt (28) des durchgehenden Lochs (26) eine zylindrische Form hat und der auseinanderlaufende untere Abschnitt (29) kegelstumpfförmig ist.

4. Belüftete Auskleidung (10) für Melkanlagen nach Anspruch 2 oder 3, **dadurch gekennzeichnet, dass** der obere Abschnitt (28) des durchgehenden Lochs (26) eine Tiefe von weniger als einem Millimeter und einen Durchmesser von weniger als einem Millimeter hat.

5. Belüftete Auskleidung (10) für Melkanlagen nach einem der vorstehenden Ansprüche, **dadurch gekennzeichnet, dass** in dem Gewinde wenigstens eine Spannungsentlastungsvertiefung (25) vorgesehen ist, die eine abschraubhemmende Funktion hat, um ein unbeabsichtigtes Lösen des Einsatzes (20) zu verhindern.

6. Belüftete Auskleidung (10) für Melkanlagen nach Anspruch 5, **dadurch gekennzeichnet, dass** die Spannungsentlastungsvertiefung (25) zwei in einem spitzen Winkel (α) angeordnete Seitenwände aufweist, um darin einen Abschnitt des Gummis der belüfteten Auskleidung (10) aufzunehmen, indem dessen Elastizität beim Schrauben genutzt wird, um eine umgekehrte Drehung zu behindern, die ein Abschrauben bewirken würde.

7. Belüftete Auskleidung (10) für Melkanlagen nach einem der vorstehenden Ansprüche, **dadurch gekennzeichnet, dass** der Kopf (14) der belüfteten Auskleidung (10) einen durchstochenen Sitz (21) aufweist und dass der Einsatz (20) durch Einschrauben in den durchstochenen Sitz (21) einsetzbar ist.

8. Belüftete Auskleidung (10) für Melkanlagen nach einem der vorstehenden Ansprüche, **dadurch gekennzeichnet, dass** der Einsatzkopf (22) so geformt ist, dass das Einschrauben des Einsatzes (20) mittels eines geeigneten Schraubenschlüssels, der auf den Einsatzkopf (22) einwirkt, möglich ist.

9. Belüftete Auskleidung (10) für Melkanlagen nach einem der vorstehenden Ansprüche, **dadurch gekennzeichnet, dass** der Körper (15) der belüfteten Auskleidung (10) einen dreieckigen, zylindrischen oder quadratischen Querschnitt aufweist.

10. Belüftete Auskleidung (10) für Melkanlagen nach einem der vorstehenden Ansprüche, **dadurch gekennzeichnet, dass** der Körper (15) der belüfteten Auskleidung (10) in einer Zitzenbecher-Schale (12) gehalten ist, wobei der Kopf (14) der belüfteten Auskleidung (10) von der Zitzenbecher-Schale (12) absteht und die Milchleitung (16) der belüfteten Auskleidung (10) außerhalb der Zitzenbecher Schale (12) ist.

11. Belüftete Auskleidung (10) für Melkanlagen nach einem der vorstehenden Ansprüche, **dadurch gekennzeichnet, dass** der durchstorchende Einsatz (20) aus Kunststoff in Lebensmittelqualität hergestellt ist.

## Revendications

1. Manchon trayeur aéré (10) pour des installations de traite, comprenant :
- une tête (14) comprenant un orifice (19) formant l'embout pour le trayon (18) de l'animal à traire ;
- un corps (15) constitué de la portion centrale du manchon trayeur aéré (10) dans lequel le trayon (18) est reçu pendant la traite ;
- un tube à lait (16) constitué de la portion du manchon trayeur aéré (10) qui est située opposée à la tête (14) ;
- un insert (20) pouvant être inséré dans la tête (14) du manchon trayeur aéré (10), ledit insert comprenant une tige (23), une tête d'insert (22) raccordée à la tige (23), et un trou traversant (26) formé longitudinalement à l'intérieur de la tige (23) et passant à travers la tête d'insert (22) et la tige (23) pour permettre une entrée constante commandée d'air dans la tête (14) du manchon trayeur aéré (10) ;
**caractérisé en ce que** sur la tige (23) est prévu un filetage (24) adapté pour être vissé dans la tête (14) du manchon trayeur aéré (10) et pénétrer dans le caoutchouc dont est fait le manchon trayeur.

2. Manchon trayeur aéré (10) pour des installations de traite selon la revendication 1, **caractérisé en ce que** ledit trou traversant (26) comprend une portion supérieure (28) ayant un diamètre constant et prévue au niveau de la tête d'insert (22), et une portion inférieure divergente (29) prévue dans la tige (23) pour rendre le trou traversant (26) auto-nettoyant.

3. Manchon trayeur aéré (10) pour des installations de traite selon la revendication 2, **caractérisé en ce que** la portion supérieure (28) du trou traversant (26) a une forme cylindrique, et la portion inférieure divergente (29) a une forme tronconique.

4. Manchon trayeur aéré (10) pour des installations de traite selon la revendication 2 ou 3, **caractérisé en ce que** la portion supérieure (28) du trou traversant (26) a une profondeur inférieure à 1 mm et un diamètre plus petit que 1 mm.

5. Manchon trayeur aéré (10) pour des installations de traite selon l'une quelconque des revendications précédentes, **caractérisé en ce que** sur le filetage est prévue au moins une indentation de détente (25) ayant une fonction anti-dévissage, pour empêcher un desserrage non souhaité de l'insert (20).

6. Manchon trayeur aéré (10) pour des installations de traite selon la revendication 5, **caractérisé en ce que** l'indentation de détente (25) comprend deux parois latérales incidentes à un angle aigu (α), afin de recevoir à l'intérieur de celle-ci une portion du caoutchouc du manchon trayeur aéré (10) en exploitant son élasticité pendant le vissage, de façon à entraver une rotation inverse qui provoquerait un dévissage.

7. Manchon trayeur aéré (10) pour des installations de traite selon l'une quelconque des revendications précédentes, **caractérisé en ce que** la tête (14) du manchon trayeur aéré (10) comprend un siège percé (21) et **en ce que** l'insert (20) peut être inséré par vissage de celui-ci dans le siège percé (21).

8. Manchon trayeur aéré (10) pour des installations de traite selon l'une quelconque des revendications précédentes, **caractérisé en ce que** le filetage (24) de la tête d'insert (22) est formé de façon à permettre un vissage de l'insert (20) au moyen d'une clé appropriée agissant sur la tête d'insert (22).

9. Manchon trayeur aéré (10) pour des installations de traite selon l'une quelconque des revendications précédentes, **caractérisé en ce que** le corps (15) du manchon trayeur aéré (10) a une section triangulaire, cylindrique ou carrée.

10. Manchon trayeur aéré (10) pour des installations de traite selon l'une quelconque des revendications précédentes, **caractérisé en ce que** le corps (15) du manchon trayeur aéré (10) est maintenu au sein d'un étui de gobelet trayeur (12), la tête (14) du manchon trayeur aéré (10) dépasse de l'étui de gobelet trayeur (12) et le tube à lait (16) du manchon trayeur aéré (10) est en dehors de l'étui de gobelet trayeur (12).

11. Manchon trayeur aéré (10) pour des installations de traite selon l'une quelconque des revendications précédentes, **caractérisé en ce que** l'insert percé (20) est fait de plastique de qualité alimentaire.
